# EUROPEAN PATENT SPECIFICATION

(11) **EP 1 833 771 B1**
(45) Date of publication and mention of the grant of the patent: **25.07.2012**
(21) Application number: 05803514.8
(22) Date of filing: 21.10.2005
(51) Int. Cl.: B01D 53/88, B01D 69/10, B01D 71/02, B01D 67/00, B01D 69/14, B01J 23/44, B01J 27/24, C01B 21/068, C04B 41/50, C04B 41/00, C04B 35/589, C04B 38/00, C04B 35/624, C04B 41/87, G01N 27/407, G01N 27/40, B01J 35/10

(54) **NOVEL NANOPOROUS MATERIALS**
NEUE NANOPORÖSE MATERIALIEN
NOUVELLES MATIERES NANOPOREUSES

(30) Priority: 25.10.2004 GB 0423646
(43) Date of publication of application: 19.09.2007
(73) Proprietor: The University of Hull, Kingston-upon-Hull HU6 7RX (GB)
(72) Inventor: BRADLEY, John, Stewart, Cottingham HU16 4QX (GB); CHENG, Fei, Hull HU6 8JQ (GB); KELLY, Stephen, Malcolm, Beverley, East Yorks HU17 8XA (GB)
(74) Representative: Chalk, Anthony John
(86) International application number: PCT/GB2005/004069
(87) International publication number: WO 2006/046012

(56) References cited:
- EP-A- 1 197 253
- US-A- 5 132 354
- F. CHENG ET. AL.: "Preparation of Mesoporous Si-M Imide Gels via a Non-Aqueous Sol-Gel Route" MAT. RES. SOC. SYMP. PROC., vol. 726, 2002, pages 255-260, XP009061026
- D. FARRUSSENG ET. AL: "Pore-Size Engineering of Silicon Imido Nitride for Catalytic Applications" ANGEW. CHEM. INT ED, vol. 40, no. 22, 2001, pages 4204-4207, XP002366403 D-69451 Weinheim
- KASKEL S ET AL: "Porous Silicon Nitride as a Superbase Catalyst" JOURNAL OF CATALYSIS, ACADEMIC PRESS, DULUTH, MN, US, vol. 201, no. 2, 25 July 2001 (2001-07-25), pages 270-274, XP004432502 ISSN: 0021-9517
- KASKEL S ET AL: "PORE SIZE ENGINEERING OF MESOPOROUS SILICON NITRIDE MATERIALS" PHYSICAL CHEMISTRY CHEMICAL PHYSICS, ROYAL SOCIETY OF CHEMISTRY, CAMBRIDGE, GB, vol. 4, no. 9, 1 May 2002 (2002-05-01), pages 1675-1681, XP001162143 ISSN: 1463-9076
- KAWAI C: "EFFECT OF GRAIN SIZE DISTRIBUTION ON THE STRENGTH OF POROUS SI3N4 CERAMICS COMPOSED OF ELONGATED BETA-SI3N4 GRAINS" JOURNAL OF MATERIALS SCIENCE, SPRINGER / BUSINESS MEDIA, DORDRECHT, NL, vol. 36, no. 23, 1 December 2001 (2001-12-01), pages 5713-5717, XP001107807 ISSN: 0022-2461
- BRADLEY J S ET AL: "HIGH SURFACE AREA SILICON IMIDONITRIDES: A NEW CLASS OF MICROPOROUSSOLID BASE" ADVANCED MATERIALS, WILEY VCH, WEINHEIM, DE, vol. 10, no. 12, 20 September 1998 (1998-09-20), pages 938-942, XP000781123 ISSN: 0935-9648

## Description

### Field of the Invention

The present invention is concerned with novel nanoporous materials, their manufacture and use. Specifically, the invention is concerned with silicon nitride materials and their use as filters and catalytic materials.

### Background to the Invention

Nanoporous ceramics and zeolites are well known from the prior art, and their use as absorbents, desiccants and filters for gases and liquids and as catalysts for chemical reactions has previously been reported. Their successful application in such fields has been attributed to the fact that the materials contain a network of small pores and possess a large active surface area. The vast majority of these nanoporous ceramics comprise naturally-occurring or synthetic silicates and aluminates, or composites of both, and they are usually hard, chemically inert, and exhibit high melting points.

In view of increasing demands for the use of gas sensors, there is a requirement for materials to be available which allow for these devices to be manufactured cheaply and provide an efficient means of gas detection, and the use of nanoporous ceramics and zeolites as filters for gases demonstrates their potential suitability for use in this field.

Gas sensors are used in a large variety of applications to detect traces of odorous, noxious or even toxic gases. They are commonly used to detect pollutants in the atmosphere, especially in public places such as shopping centres and, more especially, in travel centres such as airports. Gas sensors are also used in the food, drink and healthcare industries to detect odours, and in air quality control in smart consumer applications, such as the control of ventilation in automobiles, for example in tunnels where the concentration of exhaust fumes can be intolerably high.

In the light of increasing security considerations on a worldwide basis, an important area for the application of smart and highly selective sensors will increasingly be in civil defence, for the detection of very small amounts of toxic gases, nerve gases or odours associated with explosive material. Arrays of different gas sensors have been devised as a means of providing a kind of electronic "nose", to increase the sensitivity, selectivity, accuracy and reliability of gas detection and identification. In such cases, it is necessary that the sensors should be highly selective for the desired gases, small, cheap to manufacture, durable, corrosion resistant, reliable, and preferably integrated on silicon chips or wafers. They should also be rugged, light and portable for a range of indoor and outdoor detection applications.

The principle of using semiconductors in gas sensors dates back almost half a century when Brattan and Bardeen first reported gas sensitive effects on germanium (Bell Syst. Tech. J., 1952, 32, p 1). In more recent developments, solid state gas sensors have generally utilised metal oxides as the semiconducting gas sensing layer, so that reducing or oxidising gases increase or decrease the electron depletion layer at the surface of the metal oxide semiconductor.' Tin oxide (SnO₂) is typically used as the semiconductor, although other metal oxides such as indium oxide (In₂O₃) and tungsten oxide (WO₃) are also employed, due to the general lack of selectivity which is observed with tin oxide sensors. In operation, these semiconductor-based sensors facilitate the detection of the presence of a gas in the atmosphere as a consequence of a change in resistance of the metal oxide layer on the sensor, which is detected by means of adjacent electrodes. A heater is required to reach the operating temperature of the metal oxide sensor layers, which is typically in the range of 200°C to 400°C.

Typically, these sensors are created by screen printing techniques on ceramic substrates, although many alternative deposition procedures are known, and these use thick layers or pellets of the metal oxide (Sensors and Actuators, B 6, 1992, p 239). Micromachined solid-state gas sensors, created by etching silicon substrates and using thin layers of polycrystalline or nanocrystalline metal oxides, offer a more sophisticated and efficient sensor configuration, as they integrate several functions of the gas sensor on the silicon substrate (Sensors and Actuators, B 103, 2004, p 111). Such sensors also exhibit enhanced selectivity and sensitivity due to the higher effective surface area of the layers. Even greater improvements in selectivity and sensitivity may be achieved using metal oxide nanocrystals, rather than polycrystalline layers of metal oxides. Particularly favourable results have been reported, for example, with tin oxide, doped with palladium or platinum, as the sensing layer (Sensors and Actuators, B 78, 2001, p 83; Sensors and Actuators, B 103, 2004, p 111; Eurosensors XVIII, Rome, Sep. 12-15, 2004).

Gas sensors often incorporate a filter above the sensor layer to protect the sensor from dust particles and other solid particles, as well as from mechanical damage. The filter should also increase the selectivity of the sensor. Standard commercially available gas sensors currently use charcoal as the filter material, but charcoal suffers from the disadvantage that it cannot be regenerated once it is contaminated.

Surprisingly, the present inventors have now found that nanoporous ceramics, prepared by a sol-gel procedure, and based on silicon nitride and silicon oxynitride, as well as metal-containing derivatives of silicon nitride and silicon oxynitride, not only function as selective gas filters for gas sensors, especially micromachined solid-state gas sensors, but the combination of a gas sensor and such a filter also leads to higher selectivity of the sensor for a range of gases. Furthermore the filters can be regenerated repeatedly by heating to high temperatures in order to burn off organic contaminants. The ceramic nature of the filters is especially advantageous, since they are thermally stable at very high temperatures, and serve to thermally insulate the heater from the sensor housing.

The sol-gel preparation procedure allows the size and size-distribution of the pores to be controlled and optimised. It also allows filters of a defined size, thickness and shape to be fabricated. The preparation of nanoporous ceramics has been well documented in the prior art. Thus, for example, Cheng and various collaborators have variously described the preparation of a mesoporous silicon boron nitride via a non-aqueous sol-gel route (F. Cheng, B. Toury, F. Lefebvre, and J.S. Bradley, Chem. Commun., 2003, p 242-243), the preparation of mesoporous silicon boron imide gels from single source precursors via a non-aqueous sol-gel route (F. Cheng, S.J. Archibald, S. Clark, B. Toury, S.M. Kelly and J.S. Bradley, Chem. Mater., 2003, 15, p 4651-4657), and the application of a sol-gel technique to the preparation of 2,4,6-tris[tris(dimethylamino)silylamino]borazine (F. Cheng, B. Toury, S.J. Archibald and J.S. Bradley, J. Organometallic Chem., 2002, 657, p 71-74). In addition, the synthesis of a carbon-free, porous silicon diimide gel from tris(dialkylamino)silazanes by means of non oxide sol-gel chemistry has been reported (R. Rovai, C. W. Lehmann and J.S. Bradley, Angew. Chem. Int. Ed., 1999, 38, No. 13/14, p 2036-2038).

The preparation via the sol-gel route of mesoporous materials based on imido nitrides and including aluminium and boron, and exhibiting high surface area, is disclosed by F. Cheng, B. Toury, R. Supplit, and J.S. Bradley, Mat. Res. Soc. Symp. Proc., Vol. 726, 2002, 255-260, whilst US-A-5132354 teaches pre-ceramic polysilazanes which are composed of silicon, nitrogen, and hydrogen, and are capable of providing a high yield when pyrolyzed to form nanoporous, amorphous silicon nitride ceramics having high purity.

In other publications, S. Kaskel, K. Schlichte and B. Zibrowius, Phys. Chem. Chem. Phys., 2002, 4, 1675-1681, are concerned with pore size engineering of mesoporous silicon nitride materials, and C. Kawai, J. Mater. Sci., 36 (2001), 5713-5717 teaches the effect of grain size distributions on the strength of silicon nitride ceramics composed of elongated P-Si₃N₄ grains.

Furthermore, it is known from the prior art that nanoporous silicon nitride materials find application as catalysts. Thus, for example, pore-size engineering of silicon imido nitride has been reported by Farrusseng and co-workers (D. Farrusseng, K. Schlichte, B. Spliethoff, A. Wingen, S. Kaskel, J.S. Bradley and F. Schüth, Angew. Chem. Int. Ed., 2001, 40, No 22, p 4204-4207) as a means of obtaining samples of the material suitable for use in the catalysis of processes such as Michael addition reactions, whilst S. Kaskel and K. Schlichte, Journal of Catalysis, 201, 2001, 270-274, describe the synthesis of a mesoporous support useful in catalysis which is based on high surface area silicon nitride.

It has also been established that mesoporous and microporous silicon nitride can catalyse reactions such as the Heck reaction. However, the number of reactions which may be catalysed by such materials is extremely limited, the selectivity is low, and the range of nanoporous catalysts is small. Consequently, it is desirable that the availability of such processes should be improved, both in terms of the number of available catalysts and the variety of reactions in which they may be successfully incorporated. The present invention also provides nanoporous ceramics based on silicon nitride which offer significant improvements in the field of catalysis.

### Statements of Invention

Thus, according to a first aspect of the present invention, there is provided a selective gas filter or a catalytic material for heterogeneous chemical reactions comprising a nanoporous non-oxide material which comprises a modified derivative of silicon nitride [SiN₄], wherein said modified derivative of silicon nitride comprises a modified metal-containing derivative of silicon nitride, wherein said metal comprises nickel, palladium or platinum.

Preferably, the gas filter of the first aspect of the invention is comprised in a gas sensor.

Typically, the catalytic material of the first aspect of the invention is utilised in heterogeneous chemical reactions such as oxidation, reduction and hydrogenation reactions, and the Fischer-Tropsch reaction.

According to a second aspect of the present invention, there is provided a nanoporous non-oxide material which comprises a modified metal-containing derivative of silicon nitride, wherein said metal comprises nickel, palladium or platinum.

In both the first and second aspects of the invention, it is preferred that the nanoporous non-oxide material comprises a mesoporous non-oxide material.

In both aspects of the invention, the nanoporous non-oxide material comprises a plurality of nanoscale pores which have an average pore diameter which preferably falls in the range of from 1.5 to 50 nm, more preferably from 1.5 to 10 nm, most preferably from 1.5 to 5 nm.

In both aspects of the invention, it is particularly preferred that the nanoporous non-oxide material should be prepared by means of a sol-gel procedure.

Optionally, in either aspect of the invention, the nanoporous non-oxide material may comprise surface modifications. Said surface modifications may comprise substituents attached to the surface of the nanoporous non-oxide material. Particularly favoured substituents in this regard include (a) straight-chain or branched aliphatic groups comprising alkyl, alkenyl or alkynyl groups wherein a methylene (-CH₂-) group may optionally be substituted with a heteroatom or other group such as, for example, O, S, NH, and the like, and (b) groups comprising homogeneous catalysts such as transition metals with organic ligands. Preferably, said substituents are attached to the surface of said nanoporous non-oxide material by a spacer group, such as a straight-chain aliphatic group.

Alternatively, said surface modifications may comprise the incorporation in the surface of said nanoporous non-oxide material of additional nanoparticles which have a catalytic function or possess magnetic properties. Examples of such additional nanoparticles include ruthenium, nickel or cobalt nanoclusters.

Further aspects of the invention envisage the use of nanoporous non-oxide materials according to the second aspect of the invention in the manufacture of selective gas filters for solid state gas sensors, and the use of the said materials in the manufacture of catalysts for chemical reactions.

Yet further aspects of the invention are concerned with the manufacture of selective gas filters or catalytic materials according to the first aspect of the invention, and of nanoporous non-oxide materials according to the second aspect of the invention, by use of the sol-gel technique, and the said selective gas filters, catalytic materials and nanoporous non-oxide materials whenever prepared according to the said sol-gel technique.

### Description of the Invention

The present invention provides selective gas filters or catalytic materials for heterogeneous chemical reactions comprising a nanoporous non-oxide material which comprises a modified derivative of silicon nitride [SiN₄]. Said nanoporous materials, especially comprise mesoporous, non-oxide silicon nitride ceramics containing metals with a reproducible pore-size and size-distribution. These ternary silicon nitride derivatives, which incorporate Ni, Pd or Pt, act as selective gas filters as well as catalysing chemical reactions.

The invention also envisages ceramics which comprise specific nanoporous non-oxide materials comprising modified metal-containing derivatives of silicon nitride, wherein said metal comprises nickel, palladium or platinum.

The non-oxide ceramics are prepared by means of the sol-gel technique. A particular advantage associated with the use of the sol-gel procedure in the preparation of silicon nitride derivatives is the ability to form different shapes without the necessity for slurry powder processing. A further advantage which results from the use of this technique to prepare these materials is that they can be fabricated to form nanoporous, especially mesoporous, membranes with a defined shape and size. This is particularly useful when preparing the materials for use in the catalysis of chemical reactions.

The sol-gel technique also allows for the preparation of a series of nanoporous ceramic materials, especially mesoporous ceramic materials, having a controlled composition in addition to a defined and reproducible pore-size distribution. This facilitates improvements in the degree of selectivity of absorption. In addition, the technique facilitates the preparation of nanoporous ceramics, especially mesoporous ceramics, having a specific shape and defined dimensions either by means of mechanical compaction in a metallic dye followed by cutting, or by the use of a dipping procedure for filter formation on a microporous membrane support of suitable dimensions.

The invention provides selective gas filters and catalytic materials for heterogeneous chemical reactions comprising nanoporous non-oxide materials which comprise modified derivatives of silicon nitride [SiN₄], and are preferably novel nanoporous non-oxide materials comprising modified derivatives of silicon nitride which include transition metal containing silicon nitride derivatives such as Pd-Si₃N₄, these materials being prepared by a non-oxide sol-gel procedure.

Additional benefits may be achieved by the incorporation of surface modifications in the nanoporous non-oxide materials. Thus, for example the inclusion of aliphatic groups, preferably alkyl groups, at the surface of the material allows for control of the polarity and acidity of the surface to be achieved, whilst the incorporation of homogeneous catalysts in this manner facilitates their ease of removal from reaction solutions, since they are attached to a solid (insoluble) substrate.

The invention envisages gas sensors for use across a very wide range of applications in consumer products, commercial and industrial products and civil defence products, including solid state gas sensors for automotive applications for the detection of exhaust fumes, and civil defence applications for the detection of small amounts of toxic gases, for example in mass transport systems.

The present invention offers significant economic and practical advantages, since it provides low-cost nanoporous, and especially mesoporous, non-oxide ceramic materials which are easily manufactured and have a reproducible pore-size and size-distribution, and also facilitates the manufacture of a range of catalytic materials for heterogeneous chemical reactions, and selective gas filters which are particularly suited to a range of technological and civil defence applications.

### Description of the Drawings

The typical structure of a gas sensor according to the invention will now be illustrated by reference to the accompanying drawing, wherein:

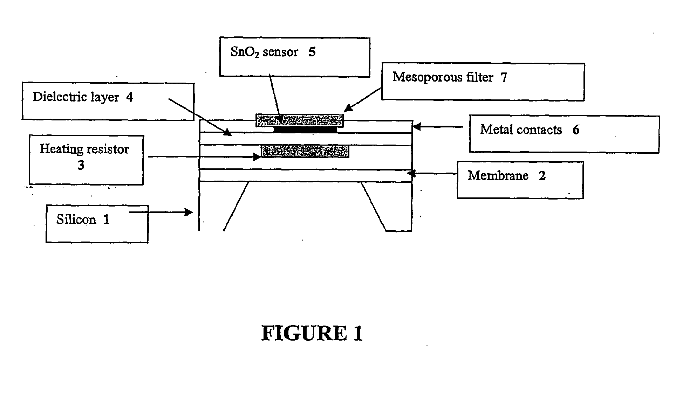

Figure 1 provides a schematic representation of a micro-machined solid-state gas sensor using tin oxide as the sensing material and including a mesoporous filter.

In Figure 1, there is comprised, in order, a silicon base 1, overlaid by a membrane 2 comprising a dielectric layer, above which is positioned a heating resistor 3, directly under a further dielectric layer 4. At the top of the sensor, tin oxide 5 is deposited alongside metal contacts 6. A mesoporous filter 7 is fabricated as an additional porous layer directly on top of the sensor. In an alternative arrangement, the mesoporous filter may be situated as a porous film or membrane above the sensor, separated by a gap from the sensing layer. Integrated thermometers, elements and detectors are employed to maintain the correct operating temperature.

Aspects of the invention will now be illustrated, though without limitation, by means of the following examples. Comparative examples are also described which relate to background art and are useful to an understanding of the invention.

### EXAMPLES

### Example 1

Mesoporous Si₃N₄-Pd composites may be prepared by pyrolysis of a reaction product of silicon nitride with PdCl₂.

A mixture of mesoporous silicon nitride prepared by a sol-gel route [Angew. Chem., Int. Ed. Eng., 1999, 38, p 2036-2038] and 5% PdCl₂ was heated at 50°C to give a light yellow powder. Heating of the yellow powder at 350°C under 8% H₂-Ar flow led to the formation of metal Pd as shown by XRD analysis. No crystalline silicon nitride can be observed in the XRD pattern. N₂ adsorption analysis shows that the composite material exhibits a mesoporous structure with a surface area of 403 m²/g and a pore size distribution similar to that of silicon nitride. TEM image shows the nano-size (5-20 nm) Pd particles on the surface of silicon nitride.

### Example 2

Mesoporous Si₃N₄-Ni composites may be prepared by pyrolysis of a reaction product of silicon diimide gel with NiBr₂.

A light green powder was prepared by a reaction of silicon dimide gel with a solution of NiBr₂. The green powder was pyrolyzed at 1000°C under NH₃ flow for 2 hours. Generally, before NH₃ flow, inert gas (Ar or N₂) was flowed though the furnace tube to remove a small amount of air which was may be introduced during the connection procedure. However, powder XRD showed that the presence of this inert gas flow before pyrolysis has a great effect on the final products. Pyrolysis under NH₃ after an argon flow gave a black powder (Product Ni1). XRD analysis indicates the formation of crystalline metal Ni. However, pyrolysis under NH₃ after a N₂ flow gave a grey powder (Product Ni2). Besides crystalline metal Ni, additional peaks ascribable to β- and α-Si₃N₄ were observed in the XRD pattern. The formation of crystalline Si₃N₄ is due to the presence of Ni metal. N₂ adsorption analysis showed that both products exhibited a mesoporous structure with a surface area of 393 m²/g. for Product Nil and 192 m²/g for Product Ni2. The pore size distributions were similar to that of silicon diimide gel with a average pore sizes of 50 Å for Product Ni1 and 53 Å for Product Ni2.

### COMPARATIVE EXAMPLES

### Comparative Example 1

Porous Si₃N₄ membranes may be prepared from a silicon diimide sol by a dipping procedure.

The porous Si₃N₄ membrane was prepared by dipping a porous α-Al₂O₃ disk in a silicon diimide sol followed by pyrolysis at 1000°C under NH₃ flow for 2 hours. SEM images indicate the presence of a Si₃N₄ membrane on the surface of the α-Al₂O₃ support. The membrane thickness is about 2.3 µm. Since the α-Al₂O₃ disk is porous and the silicon diimide sol will penetrate the pores of the disk during the dipping, Si₃N₄ membranes on the surfaces of the pores are also observed. Nitrogen adsorption analysis indicates that although a pore size distribution at 20-50 Å is observed, most of the pores are similar to those of α-Al₂O₃ disk, i.e., larger than 200 Å.

### Comparative Example 2

Filter Disks may be prepared from non-oxide ceramic powders.

The powder samples were isostatically pressed at 10 tons into a disk using the same process used for the preparation of a KBr disk for IR analysis. The disks were then cut into 6 mm diameter disks using a cork borer.

### Comparative Example 3

A mixture of 1-hexene (2 cm³) and silicon nitride (5 mg) doped with palladium (2 wt%) prepared as described in example 1, was stirred at 25°C under an atmosphere of hydrogen at a pressure of 40 psi for 4 hours. After termination of the reaction, the catalyst was filtered off and the product evaluated. GC-MS confirmed the presence of hexane and the absence of the hexene starting material. Only small amounts of 2-hexene and 3-hexene isomers were determined. These are removed at longer reaction times or higher temperatures.

## Claims

1. A nanoporous non-oxide material which comprises a modified metal-containing derivative of silicon nitride [SiN₄], wherein said metal comprises nickel, palladium or platinum.

2. A nanoporous non-oxide material as claimed in claim 1 which comprises a mesoporous non-oxide material.

3. A nanoporous non-oxide material as claimed in claim 1 which comprises a plurality of nanoscale pores which have an average pore diameter which falls in the range of from 1.5 to 50 nm, preferably from 1.5 to 10 nm, more preferably from 1.5 to 5 nm.

4. A nanoporous non-oxide material as claimed in claim 1, 2 or 3 which additionally comprises surface modifications.

5. A nanoporous non-oxide material as claimed in claim 4 wherein said surface modifications comprise substituents attached to the surface of the nanoporous non-oxide material.

6. A nanoporous non-oxide material as claimed in claim 5 wherein said substituents comprise aliphatic chains or groups comprising homogeneous catalysts.

7. A nanoporous non-oxide material as claimed in claim 6 wherein said aliphatic chains comprise straight-chain or branched alkyl, alkenyl or alkynyl groups, optionally substituted with a heteroatom such as O, S or NH, or other group.

8. A nanoporous non-oxide material as claimed in claim 6 or 7 wherein said homogeneous catalysts comprise transition metals with organic ligands.

9. A nanoporous non-oxide material as claimed in any one of claims 6 to 8 wherein said substituents are attached to the surface of said nanoporous non-oxide material by a spacer group.

10. A nanoporous non-oxide material as claimed in claim 9 wherein said spacer group comprises a straight-chain aliphatic group.

11. A nanoporous non-oxide material as claimed in claim 4 wherein said surface modifications comprise the incorporation in the surface of said nanoporous non-oxide material of additional nanoparticles which have a catalytic function or possess magnetic properties.

12. A nanoporous non-oxide material as claimed in claim 11 wherein said additional nanoparticles comprise ruthenium, nickel or cobalt nanoclusters.

13. A selective gas filter or a catalytic material for heterogeneous chemical reactions comprising a nanoporous non-oxide material as claimed in any one of claims 1 to 12.

14. The manufacture of a nanoporous non-oxide material according to any one of claims 1 to 12 by means of the sol-gel technique.

## Patentansprüche

1. Nanoporöses Nicht-Oxidmaterial, das ein modifiziertes metallhaltiges Derivat von Siliciumnitrid [SiN_{4]} umfasst, wobei das Metall Nickel, Palladium oder Platin umfasst.

2. Nanoporöses Nicht-Oxidmaterial nach Anspruch 1, das ein mesoporöses Nicht-Oxidmaterial umfasst.

3. Nanoporöses Nicht-Oxidmaterial nach Anspruch 1, das eine Vielzahl von Poren im Nanomaßstab umfasst, die einen durchschnittlichen Porendurchmesser aufweisen, der in den Bereich von 1,5 bis 50 nm, vorzugsweise 1,5 bis 10 nm, insbesondere von 1,5 bis 5 nm fällt.

4. Nanoporöses Nicht-Oxidmaterial nach Anspruch 1, 2 oder 3, das zusätzlich Oberflächenmodifizierungen umfasst.

5. Nanoporöses Nicht-Oxidmaterial nach Anspruch 4, wobei die Oberflächenmodifizierungen Substituenten umfassen, die an die Oberfläche des nanoporösen Nicht-Oxidmaterials gebunden sind.

6. Nanoporöses Nicht-Oxidmaterial nach Anspruch 5, wobei die Substituenten aliphatische Ketten oder Gruppen umfassen, die homogene Katalysatoren umfassen.

7. Nanoporöses Nicht-Oxidmaterial nach Anspruch 6, wobei die aliphatischen Ketten geradkettige oder verzweigte Alkyl-, Alkenyl- oder Alkinylgruppen umfassen, die gegebenenfalls mit einem Heteroatom, wie O, S oder NH, oder anderer Gruppe substituiert sind.

8. Nanoporöses Nicht-Oxidmaterial nach Anspruch 6 oder 7, wobei die homogenen Katalysatoren Übergangsmetalle mit organischen Liganden umfassen.

9. Nanoporöses Nicht-Oxidmaterial nach einem der Ansprüche 6 bis 8, wobei die Substituenten über eine Spacergruppe an die Oberfläche des nanoporösen Nicht-Oxidmaterials gebunden sind.

10. Nanoporöses Nicht-Oxidmaterial nach Anspruch 9, wobei die Spacergruppe eine geradkettige aliphatische Gruppe umfasst.

11. Nanoporöses Nicht-Oxidmaterial nach Anspruch 4, wobei die Oberflächenmodifizierungen den Einbau von zusätzlichen Nanopartikeln, die eine katalytische Funktion haben oder magnetische Eigenschaften besitzen, in die Oberfläche des nanoporösen Nicht-Oxidmaterials umfassen.

12. Nanoporöses Nicht-Oxidmaterial nach Anspruch 11, wobei die zusätzlichen Nanopartikel Ruthenium-, Nickel- oder Kobalt-Nanocluster umfassen.

13. Selektiver Gasfilter oder katalytisches Material für heterogene chemische Reaktionen, der bzw. das ein nanoporöses Nicht-Oxidmaterial nach einem der Ansprüche 1 bis 12 umfasst.

14. Herstellung eines nanoporösen Nicht-Oxidmaterials nach einem der Ansprüche 1 bis 12 mittels der Sol-Gel-Technik.

## Revendications

1. Matière nanoporeuse non oxyde qui comprend un dérivé modifié contenant un métal de nitrure de silicium [SiN_{4]}, dans laquelle ledit métal comprend du nickel, du palladium ou du platine.

2. Matière nanoporeuse non oxyde selon la revendication 1, laquelle comprend une matière mésoporeuse non oxyde.

3. Matière nanoporeuse non oxyde selon la revendication 1, laquelle comprend une pluralité de pores nanométriques dont le diamètre moyen de pore varie dans la plage de 1,5 à 50 nm, de préférence de 1,5 à 10 nm, plus préférablement de 1,5 à 5 nm.

4. Matière nanoporeuse non oxyde selon la revendication 1, 2 ou 3, laquelle comprend par ailleurs des modifications de surface.

5. Matière nanoporeuse non oxyde selon la revendication 4, dans laquelle lesdites modifications de surface comprennent des substituants fixés à la surface de la matière nanoporeuse non oxyde.

6. Matière nanoporeuse non oxyde selon la revendication 5, dans laquelle lesdits substituants comprennent des chaînes aliphatiques ou des groupes qui comprennent des catalyseurs homogènes.

7. Matière nanoporeuse non oxyde selon la revendication 6, dans laquelle lesdites chaînes aliphatiques comprennent des groupes alkyle, alcényle ou alcynyle à chaîne droite ou ramifiée, éventuellement substitués par un hétéroatome tel que O, S ou NH, ou un autre groupe.

8. Matière nanoporeuse non oxyde selon la revendication 6 ou 7, dans laquelle lesdits catalyseurs homogènes comprennent des métaux de transition avec des ligands organiques.

9. Matière nanoporeuse non oxyde selon l'une quelconque des revendications 6 à 8, dans laquelle lesdits substituants sont fixés à la surface de ladite matière nanoporeuse non oxyde par un groupe espaceur.

10. Matière nanoporeuse non oxyde selon la revendication 9, dans laquelle ledit groupe espaceur comprend un groupe aliphatique à chaîne droite.

11. Matière nanoporeuse non oxyde selon la revendication 4, dans laquelle lesdites modifications de surface comprennent l'incorporation dans la surface de ladite matière nanoporeuse non oxyde de nanoparticules supplémentaires qui possèdent une fonction catalytique ou des propriétés magnétiques.

12. Matière nanoporeuse non oxyde selon la revendication 11, dans laquelle lesdites nanoparticules supplémentaires comprennent des nanoagrégats de ruthénium, de nickel ou de cobalt.

13. Filtre à gaz sélectif ou matière catalytique pour des réactions chimiques hétérogènes comprenant une matière nanoporeuse non oxyde selon l'une quelconque des revendications 1 à 12.

14. Fabrication d'une matière nanoporeuse non oxyde selon l'une quelconque des revendications 1 à 12, au moyen d'une technique sol-gel.
